# EUROPEAN PATENT APPLICATION

(11) **EP 4 322 247 A1**
(43) Date of publication of application: **14.02.2024**
(21) Application number: 23186940.5
(22) Date of filing: 21.07.2023
(51) Int. Cl.: H01M 4/133, H01M 4/1393, H01M 4/583, H01M 4/62, H01M 10/052, H01M 4/02

(54) **NEGATIVE ELECTRODE AND SECONDARY BATTERY INCLUDING THE SAME**

(30) Priority: 09.08.2022 JP 2022127249
(71) Applicant: Prime Planet Energy & Solutions, Inc., Chuo-ku Tokyo 103-0022 (JP)
(72) Inventor: UEHARA, Yukitoshi, Tokyo, 103-0022 (JP)
(74) Representative: Kuhnen & Wacker Patent- und Rechtsanwaltsbüro PartG mbB

(57) **Abstract**

Provided is a negative electrode using graphite as a negative electrode active material and using carbon nanotubes as a conductive material. The negative electrode can suppress a change in thickness of the negative electrode in repetitive charge and discharge of a secondary battery and provides the secondary battery with excellent high-temperature storage characteristics. The negative electrode disclosed here includes a negative electrode current collector and a negative electrode active material layer supported on the negative electrode current collector. The negative electrode active material layer includes a negative electrode active material and single-wall carbon nanotubes. The negative electrode active material consists essentially of graphite. A mass proportion of the single-wall carbon nanotubes to the negative electrode active material is 0.02 mass% or more and 0.08 mass% or less.

## Description

### TECHNICAL FIELD

The present disclosure relates to a negative electrode. The present disclosure also relates to a secondary battery including the negative electrode.

### BACKGROUND ART

Recent secondary batteries such as lithium ion secondary batteries are suitably used for, for example, portable power supplies for devices such as personal computers and portable terminals, and power supplies for driving vehicles such as battery electric vehicles (BEVs), hybrid electric vehicles (HEVs), and plug-in hybrid electric vehicles (PHEVs).

A negative electrode used for a secondary battery such as a lithium ion secondary battery generally has a configuration in which a negative electrode active material layer is disposed on a negative electrode current collector. A known technique uses graphite as a negative electrode active material and carbon nanotubes as a conductive material, which are included in a negative electrode active material layer (see, for example, Patent Document 1). Patent Document 1 describes that the use of multi-wall carbon nanotubes whose content is 0.1 to 10 mass% of graphite in the negative electrode active material layer enhances cycle characteristics of a secondary battery.

### CITATION LIST

### PATENT DOCUMENT

Patent Document 1: JP2005-4974A

### SUMMARY

Through an intensive study, inventors of the present disclosure found that a secondary battery using the conventional negative electrode has problems in achieving both suppression of a change in thickness of a negative electrode in repetitive charge and discharge and suppression of capacity deterioration in long-term storage at high temperature. If the change in thickness of the negative electrode is large, a dimensional change of an electrode body including the negative electrode increases. With a large dimensional change of the electrode body, a reaction force occurs against keeping of a distance between electrodes, battery characteristics might be harmfully affected. The large dimensional change of the electrode body can also cause the problem of swelling of a battery case.

It is therefore an object of the present disclosure to provide a negative electrode that uses graphite as a negative electrode active material and carbon nanotubes as a conductive material, can suppress a change in thickness of the negative electrode in repetitive charge and discharge of a secondary battery, and can provide the secondary battery with excellent high-temperature storage characteristics.

A negative electrode disclosed here includes a negative electrode current collector and a negative electrode active material layer supported on the negative electrode current collector. The negative electrode active material layer includes a negative electrode active material and a single-wall carbon nanotube. The negative electrode active material consists essentially of graphite. A mass proportion of the single-wall carbon nanotube to the negative electrode active material is 0.02 mass% or more and 0.08 mass% or less.

This configuration makes it possible to provide a negative electrode that uses graphite as a negative electrode active material and carbon nanotubes as a conductive material, can suppress a change in thickness of the negative electrode in repetitive charge and discharge of a secondary battery, and can provide the secondary battery with excellent high-temperature storage characteristic (i.e., resistance to capacity deterioration in long-term storage at high temperature).

### BRIEF DESCRIPTION OF THE DRAWINGS

FIG. 1 is a cross-sectional view schematically illustrating a negative electrode according to one embodiment of the present disclosure.
FIG. 2 is a cross-sectional view schematically illustrating an internal structure of a lithium ion secondary battery using a negative electrode according to one embodiment of the present disclosure.
FIG. 3 is a schematic disassembled view illustrating a structure of a wound electrode body of the lithium ion secondary battery illustrated in FIG. 2.

### DETAILED DESCRIPTION

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and a common general knowledge in the field. In the drawings, members and parts having the same functions are denoted by the same reference characters for description. Dimensional relationships (e.g., length, width, and thickness) in the drawings do not reflect actual dimensional relationships.

A "secondary battery" herein refers to a power storage device capable of being repeatedly charged and discharged, and includes a so-called storage battery and a power storage element such as an electric double layer capacitor. A "lithium ion secondary battery" herein refers to a secondary battery that uses lithium ions as charge carriers and performs charge and discharge by movement of charges accompanying lithium ions between positive and negative electrodes.

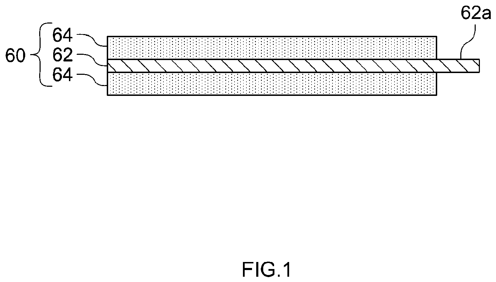

A negative electrode disclosed here is typically used for a secondary battery, and desirably used for a lithium ion secondary battery. FIG. 1 is a cross-sectional view schematically illustrating a negative electrode 60 according to this embodiment as an example of the negative electrode disclosed here, and is a cross-sectional view taken along a thickness direction. The negative electrode 60 according to this embodiment illustrated in FIG. 1 is a negative electrode of a lithium ion secondary battery.

As illustrated in the drawings, the negative electrode 60 includes a negative electrode current collector 62, and a negative electrode active material layer 64 supported by the negative electrode current collector 62. In other words, the negative electrode 60 includes the negative electrode current collector 62, and the negative electrode active material layer 64 disposed on the negative electrode current collector 62. The negative electrode active material layer 64 may be provided only on one surface of the negative electrode current collector 62 or may be provided on each surface of the negative electrode current collector 62 as shown in the illustrated example. The negative electrode active material layer 64 is desirably provided on each surface of the negative electrode current collector 62.

As illustrated in the example, a negative electrode active material layer non-formed portion 62a including no negative electrode active material layer 64 may be provided at one end of the negative electrode 60 in the width direction. In the negative electrode active material layer non-formed portion 62a, the negative electrode current collector 62 is exposed so that the negative electrode active material layer non-formed portion 62a can function as a current collector. However, the structure for collecting electricity from the negative electrode 60 is not limited to this example.

The negative electrode current collector 62 has a foil shape (or a sheet shape) in the illustrated example, but is not limited to this shape. The negative electrode current collector 62 may have various forms such as a rod shape, a plate shape, or a mesh shape. The material for the negative electrode current collector 62 can be a highly conductive metal (e.g., copper, nickel, titanium, or stainless steel) in a manner similar to a conventional lithium ion secondary battery, and among these metals, copper is desirable. As the negative electrode current collector 62, copper foil is particularly desirable.

Dimensions of the negative electrode current collector 62 are not particularly limited, and may be appropriately determined depending on battery design. In the case of using copper foil as the negative electrode current collector 62, the thickness of the foil is not particularly limited, and is, for example, 5 µm or more and 35 µm or less and desirably 6 µm or more and 20 µm or less.

The negative electrode active material layer 64 includes a negative electrode active material and single-wall carbon nanotubes (SWCNTs). The SWCNTs are typically dispersed in the negative electrode active material layer 64. The SWCNTs contact with plural particles of the negative electrode active material or with a particle of the negative electrode active material and the negative electrode current collector 62 to thereby form a conductive path and function as a conductive material.

In the embodiment, the negative electrode active material consists essentially of graphite. The expression "the negative electrode active material consists essentially of graphite" herein means that the negative electrode active material includes graphite as an essential element and may include a negative electrode active material other than graphite, but the negative electrode active material other than graphite is present to the degree that does not harmfully affect advantages of the present disclosure. A proportion of graphite in the negative electrode active material is desirably 99 mass% or more and, more desirably 99.5 mass% or more, and even more desirably 100 mass% (i.e., the negative electrode active material consists only of graphite).

Graphite may be natural graphite or artificial graphite. Graphite may be amorphous carbon-coated graphite in which graphite is coated with an amorphous carbon material.

An average particle size (D50) of the negative electrode active material is not particularly limited, and is typically 50 µm or less, desirably 1 µm or more and 25 µm or less, and more desirably 5 µm or more and 20 µm or less. It should be noted that the average particle size (D50) of the negative electrode active material can be obtained by measuring particle size distribution of the negative electrode active material on a volume basis by a laser diffraction scattering method and determining a particle size (D50) whose cumulative frequency is 50% by volume in the particle size distribution.

A BET specific surface area of the negative electrode active material is not particularly limited, and is generally 1.5 m²/g or more and desirably 2.5 m²/g or more. On the other hand, the BET specific surface area is generally 10 m²/g or less and desirably 6 m²/g or less. It should be noted that the "BET specific surface area" herein refers to a value obtained by analyzing, by a BET method, a gas adsorption amount measured by a gas adsorption method (constant volume adsorption method) using a nitrogen (N₂) gas as an adsorbate.

In this embodiment, SWCNTs are used. The type of the SWCNTs is not particularly limited, and may be produced by a method such as an arc discharge method, a laser ablation method, or a chemical vapor deposition method.

The use of a specific amount of the SWCNTs as CNTs can enhance suppression of a change in thickness of the negative electrode 60 in repetitive charge and discharge of a secondary battery using the negative electrode 60 and resistance to capacity deterioration in long-term storage of the secondary battery using the negative electrode 60 at high temperature. This is supposed to be because of the following reasons.

A graphene sheet structure of the CTNs and a graphene sheet structure of graphite interact with each other, and the CNTs have fibrous form. Accordingly, the CNTs cling to graphite particles and hold the graphite particles. Thus, the CNTs have a certain level of function of binding graphite particles. The SWCNTs have a diameter significantly smaller than that of multi-wall carbon nanotubes (MWCNTs) used in a conventional technique, and thus, a significantly larger number of CNTs are used when SWCNTs and MWCNTs are used in the same amount. Accordingly, a small amount of SWCNTs is sufficient for binding graphite particles so that a change in thickness of the negative electrode 60 in repetitive charge and discharge of the secondary battery can be suppressed. As compared to MWCNTs, SWCNTs hardly cause intercalation of lithium ions into the CNT structure. Accordingly, decomposition of an electrolyte is less likely to occur in long-term storage of the secondary battery at high temperature. As a result, capacity deterioration in long-term storage of the secondary battery at high temperature can be suppressed.

An average length (i.e., average fiber length) of the SWCNTs is not particularly limited. When the average length of the SWCNTs is excessively long, the SWCNTs tend to be agglomerated and reduce dispersibility thereof. In view of this, the average length of the SWCNTs is desirably 15 µm or less, more desirably 8.0 µm or less, even more desirably 5.0 µm or less, and most desirably 3.0 µm or less. On the other hand, when the average length of the SWCNTs is excessively small, a conductive path between negative electrode active materials is less likely to be formed. In view of this, the average length of the SWCNTs is desirably 0.3 µm or more, more desirably 0.5 µm or more, even more desirably 0.8 µm or more, and most desirably 1.0 µm or more.

An average diameter (i.e., average fiber diameter) of the SWCNTs is not particularly limited, and is desirably 0.5 nm or more and more desirably 1.0 nm or more. The average diameter of the SWCNTs is desirably 3.0 nm or less, more desirably 2.5 nm or less, and even more desirably 2.0 nm or less.

It should be noted that the average length and the average diameter of the CNTs can be determined as average values of lengths and diameters of 100 or more CNTs using an electron microscope image of the CNTs, respectively. Specifically, for example, a CNT dispersion solution is diluted and then dried, thereby preparing a measurement sample. This sample is observed with a scanning electron microscope (SEM), lengths and diameters of 100 or more CNTs are obtained, and averages of the obtained lengths and the diameters are calculated. At this time, when CNTs are reagglomerated, a length and a diameter of a bundle of the agglomerated CNTs are obtained.

In this embodiment, a mass proportion of the SWCNTs with respect to the negative electrode active material is 0.02 mass% or more and 0.08 mass% or less. When the mass proportion of the SWCNTs is less than 0.02 mass%, a dimensional change of the negative electrode 60 in repetitive charge and discharge is large. On the other hand, when the mass proportion of the SWCNTs exceeds 0.08 mass%, resistance to capacity deterioration in long-term storage at high temperature decreases.

The negative electrode active material layer 64 may include a component (hereinafter referred to as an "optional component") other than the negative electrode active material and the SWCNTs. Examples of the optional component include a binder, a thickener, a carbon nanotube (CNT) dispersant.

Examples of the binder include styrene-butadiene rubber (SBR) and polyvinylidene fluoride (PVDF). Examples of the thickener include carboxymethyl cellulose (CMC) and a salt thereof. Specific examples of the CNT dispersant include: polycondensed aromatic surfactants such as a naphthalenesulfonic acid formalin condensate sodium salt, a naphthalenesulfonic acid formalin condensate ammonium salt, and a methyl naphthalenesulfonic acid formalin condensate sodium salt; polycarboxylic acid and a salt thereof such as polyacrylic acid and a salt thereof and polymethacrylic acid and a salt thereof; triazine derivative dispersants (desirably a dispersant including a carbazolyl group or a benzimidazolyl group); polyvinylpyrrolidone (PVP); polymers having polynuclear aromatic group such as pyrene and anthracene in a side chain; and polynuclear aromatic ammonium derivatives such as a pyrene ammonium derivative (e.g., a compound in which an ammonium bromide group is introduced to pyrene) and an anthracene ammonium derivative. These CNT dispersants may be used alone or in combination of two or more of them. The CNT dispersant desirably includes a polynuclear aromatic group. Specifically, the CNT dispersant is desirably a polymer having a polynuclear aromatic group in a side chain, and a polynuclear aromatic ammonium derivative.

A content of the negative electrode active material in the negative electrode active material layer 64 is desirably 90 mass% or more, and more desirably 95 mass% or more and 99 mass% or less. A content of the binder in the negative electrode active material layer 64 is desirably 0.1 mass% or more and 8 mass% or less, and more desirably 0.5 mass% or more and 3 mass% or less. A content of the thickener in the negative electrode active material layer 64 is desirably 0.3 mass% or more and 3 mass% or less, and more desirably 0.5 mass% or more and 2 mass% or less. The amount of use of the CNT dispersant is 1 part by mass or more and 400 parts by mass or less, and desirably 20 parts by mass or more and 200 parts by mass or less, with respect to 100 parts by mass of SWCNTs.

A thickness of the negative electrode active material layer 64 at one side is not particularly limited, and is usually 10 µm or more, and desirably 20 µm or more. On the other hand, this thickness is usually 400 µm or less, and desirably 300 µm or less.

The negative electrode 60 may include a member (e.g., insulating layer) other than the negative electrode current collector 62 and the negative electrode active material layer 64.

The negative electrode 60 according to this embodiment can suppress a change in thickness of the negative electrode 60 in repetitive charge and discharge of the secondary battery using the negative electrode 60, and can also suppress capacity deterioration. The secondary battery can also be provided with excellent high-temperature storage characteristics (particularly resistance to capacity deterioration in long-term storage at high temperature).

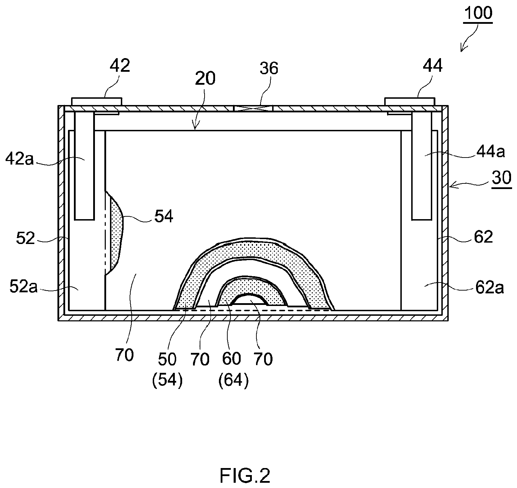

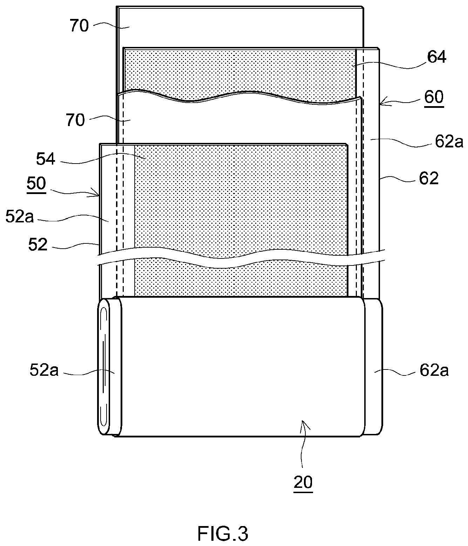

In view of this, the secondary battery disclosed here includes a positive electrode, the negative electrode 60 according to this embodiment, and an electrolyte. An embodiment of the secondary battery disclosed here will be described with reference to FIGS. 2 and 3 using a lithium ion secondary battery as an example.

A lithium ion secondary battery 100 illustrated in FIG. 2 is a sealed lithium ion secondary battery 100 in which a flat wound electrode body 20 and a nonaqueous electrolyte (not shown) are housed in a flat square battery case (i.e., outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The battery case 30 has an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a. A material for the battery case 30 is, for example, a metal material that is lightweight and has high thermal conductivity, such as aluminium.

As illustrated in FIGS. 2 and 3, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each surface (each in this example) of a long negative electrode current collector 62 along the longitudinal direction. The positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). A positive electrode current collector plate 42a and a negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a known positive electrode current collector for use in a lithium ion secondary battery, and examples of the positive electrode current collector 52 include sheets or foil of highly conductive metals (e.g., aluminium, nickel, titanium, and stainless steel). The positive electrode current collector 52 is desirably aluminium foil.

Dimensions of the positive electrode current collector 52 are not particularly limited, and may be appropriately determined depending on battery design. In the case of using aluminium foil as the positive electrode current collector 52, the thickness thereof is not particularly limited, and is, for example, 5 µm or more and 35 µm or less, and desirably 7 µm or more and 20 µm or less.

The positive electrode active material layer 54 includes a positive electrode active material. The positive electrode active material may be a positive electrode active material having a known composition for use in a lithium ion secondary battery. Specifically, as the positive electrode active material, a lithium composite oxide or a lithium transition metal phosphate compound, for example, may be used. A crystal structure of the positive electrode active material is not particularly limited, and may be, for example, a layered structure, a spinel structure, or an olivine structure.

The lithium composite oxide is desirably a lithium transition metal composite oxide including at least one of Ni, Co, or Mn as a transition metal element, and specific examples of the lithium transition metal composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminium composite oxide, and a lithium iron nickel manganese composite oxide.

The "lithium nickel cobalt manganese composite oxide" herein includes not only oxides including Li, Ni, Co, Mn, and O as constituent elements, but also an oxide further including one or more additive elements besides them. Examples of the additive elements include transition metal elements and typical metal elements such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I. This also applies, in the same manner, to, for example, the lithium nickel composite oxide, the lithium cobalt composite oxide, the lithium manganese composite oxide, the lithium nickel manganese composite oxide, the lithium nickel cobalt aluminium composite oxide, and the lithium iron nickel manganese composite oxide described above.

Examples of the lithium transition metal phosphate compound include lithium iron phosphate (LiFePO₄), lithium manganese phosphate (LiMnPO₄), and lithium manganese iron phosphate.

These positive electrode active materials can be used alone or two or more of them may be used in combination. The positive electrode active material is particularly desirably a lithium nickel cobalt manganese composite oxide because of excellent characteristics such as an initial resistance characteristic.

An average particle size (median particle size: D50) of the positive electrode active material is not particularly limited, and is, for example, 0.05 µm or more and 25 µm or less, desirably 1 µm or more and 20 µm or less, and more desirably 3 µm or more and 15 µm or less. It should be noted that the average particle size (D50) of the positive electrode active material can be determined by, for example, a laser diffraction and scattering method.

The positive electrode active material layer 54 may include components other than the positive electrode active material, such as trilithium phosphate, a conductive agent, and a binder. Desired examples of the conductive agent include: carbon black such as acetylene black (AB); carbon fibers such as vapor grown carbon fibers (VGCFs) and carbon nanotubes (CNTs); and other carbon materials (e.g., graphite). Examples of the binder include polyvinylidene fluoride (PVdF).

A content of the positive electrode active material in the positive electrode active material layer 54 (i.e., content of the positive electrode active material with respect to a total mass of the positive electrode active material layer 54) is not particularly limited, and is desirably 70 mass% or more, more desirably 80 mass% or more, and much more desirably 85 mass% or more and 99 mass% or less. The content of trilithium phosphate in the positive electrode active material layer 54 is not particularly limited, and is desirably 0.1 mass% or more and 15 mass% or less, and more desirably 0.2 mass% or more and 10 mass% or less. A content of the conductive material in the positive electrode active material layer 54 is not particularly limited, and is desirably 0.1 mass% or more and 20 mass% or less, and more desirably 0.3 mass% or more and 15 mass% or less. A content of the binder in the positive electrode active material layer 54 is not particularly limited, and is desirably 0.4 mass% or more and 15 mass% or less, and more desirably 0.5 mass% or more and 10 mass% or less.

A thickness of the positive electrode active material layer 54 at one side is not particularly limited, and is usually 10 µm or more, and desirably 20 µm or more. On the other hand, this thickness is usually 300 µm or less, and desirably 200 µm or less.

As the negative electrode sheet 60, the negative electrode 60 described above is used.

Examples of the separator 70 include a porous sheet (film) of a resin such as polyethylene (PE), polypropylene (PP), polyester, cellulose, and polyamide. The porous sheet may have a single-layer structure or a laminated structure of two or more layers (e.g., three-layer structure in which PP layers are stacked on both surfaces of a PE layer). A heatresistance layer (HRL) may be provided on a surface of the separator 70.

The thickness of the separator 70 is not particularly limited, and is, for example, 5 µm or more and 50 µm or less, and desirably 10 µm or more and 30 µm or less. An air permeability of the separator 70 obtained by a Gurley permeability test is not particularly limited, and is desirably 350 sec./100 cc or less.

The nonaqueous electrolyte typically includes a nonaqueous solvent and a supporting salt (electrolyte salt). As the nonaqueous solvent, various organic solvents such as carbonates, ethers, esters, nitriles, sulfones, and lactones for use in an electrolyte of a typical lithium ion secondary battery can be used without any particular limitation. Among these materials, carbonates are desirable, and specific examples of the carbonates include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such nonaqueous solvents may be used alone or two or more of them may be used in combination. As an example, the nonaqueous solvent consists only of carbonates.

Desired examples of the supporting salt include lithium salts (desirably LiPF₆) such as LiPF₆, LiBF₄, and lithium bis(fluorosulfonyl)imide (LiFSI). A concentration of the supporting salt is desirably 0.7 mol/L or more and 1.3 mol/L or less.

The nonaqueous electrolyte may include components not described above, for example, various additives exemplified by: a film forming agent such as vinylene carbonate (VC) and an oxalato complex; a gas generating agent such as biphenyl (BP) or cyclohexylbenzene (CHB); and a thickener, as long as the effects of the present disclosure are not significantly impaired.

In the lithium ion secondary battery 100, changes in thicknesses of the negative electrode 60 and the electrode body 20 in repetitive charge and discharge are suppressed so that battery characteristics are thereby less likely to be harmfully affected by a dimensional change of the electrode body 20. In the lithium ion secondary battery 100, capacity deterioration in repetitive charge and discharge is also suppressed. In addition, in the lithium ion secondary battery 100, capacity deterioration in long-term storage at high temperature is suppressed. The lithium ion secondary battery 100 is applicable to various applications. Examples of desired application include a drive power supply to be mounted on a vehicle such as a battery electric vehicle (BEV), a hybrid electric vehicle (BEV), and a plug-in hybrid electric vehicle (PHEV). The lithium ion secondary battery 100 can be used as a storage battery for, for example, a small-size power storage device. The lithium ion secondary battery 100 can be used in a battery pack in which a plurality of batteries are typically connected in series and/or in parallel.

The foregoing description is directed to the square lithium ion secondary battery 100 including the flat wound electrode body 20 as an example. Alternatively, the lithium ion secondary battery can also be configured as a lithium ion secondary battery including a stacked-type electrode body (i.e., electrode body in which a plurality of positive electrodes and a plurality of negative electrodes are alternately stacked). The lithium ion secondary battery can also be configured as a cylindrical lithium ion secondary battery or a laminated-case lithium ion secondary battery. It should be noted that harmful effects on battery characteristics by a dimensional change of the electrode body are most noticeable in a square lithium ion secondary battery. Thus, the square lithium ion secondary battery shows highest advantageous effects obtained by suppressing a change in thickness of the negative electrode in repetitive charge and discharge.

According to a known method, the lithium ion secondary battery 100 can also be configured as an all-solid-state lithium ion secondary battery using a solid electrolyte instead of the nonaqueous electrolyte.

The negative electrode 60 according to this embodiment is suitable as a negative electrode of a lithium ion secondary battery, and is also usable as negative electrodes of other secondary batteries. These other secondary batteries can be configured in accordance with a known method.

Examples of the present disclosure will now be described, but are not intended to limit the present disclosure to these examples.

### <Examples 1 to 3 and Comparative Examples 1 to 9>

Natural graphite (C) having an average particle size (D50) of 15 µm, silicon oxide (SiOx), an aqueous solution of sodium salt (CMC-Na) of carboxymethyl cellulose, a dispersion of styrene-butadiene rubber (SBR), and a carbon nanotubes (CNT) dispersion were mixed at a solid mass ratio of graphite : SiOx : CMC-Na : SBR : CNT = 100-α : α : 1 : 1 : β. Here, α and β are values shown in Table 1. As carbon nanotubes, in Comparative Examples 1 to 4, multi-wall carbon nanotubes (average fiber length: 1.2 µm; average diameter: 13 nm) were used, whereas in Examples 1 to 3 and Comparative Examples 5, 6, 8, and 9, single-wall carbon nanotubes (average fiber length: 1.2 µm; average diameter: 2 nm) were used.

An appropriate amount of ion-exchanged water was added to the mixture, thereby preparing negative electrode slurry. The prepared negative electrode slurry was applied to each surface of copper foil as a negative electrode current collector. At this time, as a lead connection portion, a negative electrode slurry uncoated portion was provided on the copper foil. An amount of the applied negative electrode slurry was set such that weight per area of the negative electrode active material layer (total of both surfaces) was allowed to have a value shown in Table 1.

The applied paste was dried, thereby forming a negative electrode active material layer. The obtained sheet was pressed with rollers, and then cut into predetermined dimensions, thereby obtaining a negative electrode in which the negative electrode active material layer was formed on each surface of the negative electrode current collector. The negative electrode active material layer had a packing density of 1.50 g/cm³.

Then, LiNi_{1/3}Co_{1/3}Mn_{1/3}O₂ as a positive electrode active material, acetylene black (AB) as a conductive material, and PVdF as a binder were mixed at a mass ratio of active material : AB : PVdF = 97.0 : 2.0 : 1.0. An appropriate amount of N-methyl-2-pyrrolidone was added to the mixture, thereby preparing positive electrode slurry. The positive electrode slurry was applied to each surface of aluminium foil as a positive electrode current collector. At this time, as a lead connection portion, a positive electrode slurry uncoated portion was provided on the aluminium foil. The applied slurry was dried, thereby forming a positive electrode active material layer. The obtained sheet was pressed with rollers, and then cut into predetermined dimensions, thereby obtaining a positive electrode in which the positive electrode active material layer was formed on each surface of the positive electrode current collector. The positive electrode active material layer had a packing density of 3.50 g/cm³.

Leads are attached to each of the positive and negative electrodes fabricated as described above. A single-layer polypropylene separator was prepared. Positive electrodes and negative electrodes were alternately stacked one by one with a separator interposed therebetween, thereby producing a stacked-type electrode body.

A mixed solvent including ethylene carbonate (EC), dimethyl carbonate (DMC), and ethyl methyl carbonate (EMC) at a volume ratio of 30 : 40 : 30 was prepared. Vinylene carbonate was dissolved in this mixed solvent at a concentration of 1 mass%, and LiPF₆ as a supporting salt was dissolved at a concentration of 1.15 mol/L. In this manner, a nonaqueous electrolyte was obtained.

The thus-obtained laminated electrode body and nonaqueous electrolyte were housed in a square battery case and sealed, thereby obtaining an evaluation lithium ion secondary battery according to each of examples and comparative examples.

### <Charge/discharge Cycle Evaluation>

Each evaluation lithium ion secondary battery was transferred to a glove box under an argon atmosphere and disassembled. An electrode body was taken out and a thickness thereof was measured as an initial thickness.

On the other hand, each evaluation lithium ion secondary battery was left in an environment at 25°C, and CC-CV charging with a charge voltage of 4.2 V at a charge current of 0.5 C was performed for three hours. Thereafter, the secondary battery was discharged with a constant current (CC) to 3.0 V at a discharge current of 0.5 C. A discharge capacity at this time was measured and used as an initial capacity.

Next, each evaluation lithium ion secondary battery was subjected to 1000 cycles of charging and discharging, in which one cycle included the above CC-CV charging and the above CC discharging. Thereafter, in a manner similar to the measurement of the initial capacity, a discharge capacity was measured. From (discharge capacity at 1000th cycle/initial capacity) × 100, a capacity retention rate (%) was calculated. Table 1 shows the results.

In addition, each evaluation lithium ion secondary battery after the 1000 cycles of charging and discharging was transferred to a glove box under an argon atmosphere and disassembled. Then, the electrode body was taken out, and a thickness thereof was measured. A difference between the thickness of the electrode after 1000 cycles and the initial thickness was determined as a thickness change (µm). Table 1 shows the results. It should be noted that the change in thickness of the electrode body is derived mainly from a change in thickness of the negative electrode.

### <High-temperature Storage Evaluation>

An initial capacity of each evaluation lithium ion secondary battery was obtained in the same manner as the above evaluation. Next, each evaluation lithium ion secondary battery was left in an environment at 25°C, and CC-CV charge with a charge voltage of 4.2 V at a charge current of 0.5 C was performed for three hours. Next, each evaluation lithium ion secondary battery was stored in a thermostat at 60°C for 180 days, and then, a discharge capacity was measured in the same manner as for an initial capacity. From (discharge capacity after storage/initial capacity) × 100, a capacity retention rate (%) was calculated. Table 1 shows the results. In this test, a capacity retention rate of 92.0% or more was regarded as a satisfactory.
[Table 1]

**Table 1**

| | Negative Electrode Active Material Mass Ratio | | CNT | | Weight per area (mg/cm²) | Charge/discharge Cycle Evaluation | | High-temperature Storage Evaluation |
|---|---|---|---|---|---|---|---|---|
| | Graphite | SiOx (*α*) | Type | Content *β* | | Capacity Retention Rate (%) | Electrode Body Thickness Change (*µ*m) | Capacity Retention Rate (%) |
| Comparative Example 1 | 100 | 0 | MWCNT | 0.08 | 26.0 | 80.9 | 623 | 90.4 |
| Comparative Example 2 | 100 | 0 | MWCNT | 0.10 | 26.0 | 82.3 | 558 | 89.9 |
| Comparative Example 3 | 100 | 0 | MWCNT | 0.50 | 26.1 | 82.4 | 412 | 87.5 |
| Comparative Example 4 | 100 | 0 | MWCNT | 1.00 | 26.2 | 82.4 | 362 | 84.1 |
| Comparative Example 5 | 100 | 0 | SWCNT | 0.01 | 26.0 | 82.6 | 541 | 92.2 |
| Example 1 | 100 | 0 | SWCNT | 0.02 | 26.0 | 82.6 | 365 | 92.1 |
| Example 2 | 100 | 0 | SWCNT | 0.05 | 26.0 | 82.5 | 368 | 92.0 |
| Example 3 | 100 | 0 | SWCNT | 0.08 | 26.0 | 82.5 | 367 | 92.0 |
| Comparative Example 6 | 100 | 0 | SWCNT | 0.10 | 26.0 | 82.6 | 364 | 91.5 |
| Comparative Example 7 | 100 | 0 | - | 0.00 | 26.0 | 78.1 | 780 | 92.5 |
| Comparative Example 8 | 90 | 10 | SWCNT | 0.08 | 19.9 | 58.3 | 2193 | 89.0 |
| Comparative Example 9 | 0 | 100 | SWCNT | 0.08 | 6.6 | 10.8 | 7971 | 69.4 |

In Comparative Examples 1 to 4, in a manner similar to a conventional technique, multi-wall carbon nanotubes (MWCNTs) were used. In the case of using MWCNTs, when the content of the MWCNTs was small, a change in thickness after charge/discharge cycles was large, whereas the content of the MWCNTs was large, the high-temperature storage characteristics were poor. Thus, in the case of using MWCNTs, it is impossible to achieve both suppression of a change in thickness of the negative electrode after charge/discharge cycles and excellent high-temperature storage characteristics.

On the other hand, in Examples 1 to 3 and Comparative Examples 5 and 6, single-wall carbon nanotubes (SWCNTs) were used. These results show that in a case were a content of SWCNTs was 0.02 mass% to 0.08 mass% of the negative electrode active material, both suppression of a change in thickness after charge/discharge cycles and excellent high-temperature storage characteristics can be achieved.

In Comparative Example 8, graphite and a small amount of silicon oxide were used in combination as negative electrode active materials, and in Comparative Example 9, only silicon oxide was used as a negative electrode active material. These results show that the effect of suppressing a thickness change after charge/discharge cycles and the effect of enhancing high-temperature storage characteristics are obtained in the case where the negative electrode active material consists essentially of graphite.

The foregoing results show that the negative electrode disclosed here can suppress a change in thickness of the negative electrode in repetitive charge and discharge of a secondary battery and can provide the secondary battery with excellent high-temperature storage characteristics.

Specific examples of the present disclosure have been described in detail hereinbefore, but are merely illustrative examples, and are not intended to limit the scope of claims. The techniques described in claims include various modifications and changes of the above exemplified specific examples.

That is, the negative electrode and the secondary battery disclosed here are items [1] to [5]:
[1] A negative electrode including:
   a negative electrode current collector; and
   a negative electrode active material layer supported on the negative electrode current collector, wherein
   the negative electrode active material layer includes a negative electrode active material and single-wall carbon nanotubes,
   the negative electrode active material consists essentially of graphite,
   a mass proportion of the single-wall carbon nanotubes to the negative electrode active material is 0.02 mass% or more and 0.08 mass% or less.
[2] The negative electrode according to item [1], wherein an average diameter of the single-wall carbon nanotube is 0.5 nm or more and 3.0 nm or less.
[3] The negative electrode according to item [1] or [2], wherein a proportion of graphite in the negative electrode active material is 99 mass% or more.
[4] The negative electrode according to any one of items [1] to [3], wherein the negative electrode is a negative electrode of a lithium ion secondary battery.
[5] A secondary battery including:
   a positive electrode;
   the negative electrode according to any one of items [1] to [4]; and
   an electrolyte.

## Claims

1. A negative electrode (60) comprising:
a negative electrode current collector (62);
a negative electrode active material layer (64) supported on the negative electrode current collector r (62), wherein
the negative electrode active material layer (64) includes a negative electrode active material and single-wall carbon nanotubes,
the negative electrode active material consists essentially of graphite, and
a mass proportion of the single-wall carbon nanotubes to the negative electrode active material is 0.02 mass% or more and 0.08 mass% or less.

2. The negative electrode (60) according to claim 1, wherein an average diameter of the single-wall carbon nanotubes is 0.5 nm or more and 3.0 nm or less.

3. The negative electrode (60) according to claim 1, wherein a proportion of graphite in the negative electrode active material is 99 mass% or more.

4. The negative electrode (60) according to claim 1, wherein the negative electrode (60) is a negative electrode of a lithium ion secondary battery.

5. A secondary battery (100) comprising:
a positive electrode (50);
the negative electrode (60) according to claim 1; and
an electrolyte.
